# EUROPÄISCHE PATENTSCHRIFT

(11) **EP 2 547 190 B1**
(45) Veröffentlichungstag und Bekanntmachung des Hinweises auf die Patenterteilung: **19.08.2015**
(21) Anmeldenummer: 11708709.8
(22) Anmeldetag: 28.02.2011
(51) Int. Cl.: A01C 15/00, A01C 17/00

(54) **ZWEISCHEIBENSTREUER**
TWO DISK SPREADER
ÉPANDEUR À DOUBLE DISQUE

(30) Priorität: 15.03.2010 DE 102010015954
(43) Veröffentlichungstag der Anmeldung: 23.01.2013
(73) Patentinhaber: Amazonen-Werke H. Dreyer GmbH & Co. KG, 49205 Hasbergen (DE)
(72) Erfinder: JOHANNABER, Stefan, Jan, 49536 Lienen (DE)
(86) Internationale Anmeldenummer: PCT/EP2011/000977
(87) Internationale Veröffentlichungsnummer: WO 2011/113529

(56) Entgegenhaltungen:
- EP-A1- 1 707 042
- EP-A2- 0 392 288
- EP-A2- 2 286 652
- DE-B1- 2 835 011

## Beschreibung

Die Erfindung betrifft einen Zweischeibenstreuer gemäß des Oberbegriffes des Patentanspruches 1.

Ein derartiger Zweischeibenstreuer ist beispielsweise durch die EP 1 707 042 A1 bekannt. Bei diesem Schleuderstreuer ist in dem den Trichter nach unten abschließenden Bereich eine Dosieröffnung angeordnet, deren Öffnungsquerschnitt über einen Schieber einstellbar ist. Hierbei ist die Dosieröffnung derart ausgestaltet, dass bei kleinen Massenströmen zwischen Dosierkante des Dosierschiebers und der Öffnungskante der Dosieröffnung zumindest zwei Teilöffnungen gebildet werden. Weiterhin ist im unteren Bereich des Vorratsbehälters oberhalb der Dosieröffnung ein im Bereich der Teilöffnungen bei kleinen Massenströmen wirksames Rührorgan angeordnet. Dieses Rührorgan weist eine von unten in den Behälter geführte Rührwelle auf. Auf dem oberen Ende der in dem Behälter von unten senkrecht hinein geführten Welle ist ein Rührorgan angeordnet. Die Rührelemente des Rührorgans sind im Bereich der Teilöffnungen wirksam. Die Rührwirkung des Rührorgans ist im überwiegenden Maße jedoch in einem Bereich wirksam, in dem keine Dosieröffnungen angeordnet sind.

Durch die DE 28 35 011 C2 ist ein Zweischeibenstreuer bekannt geworden. In dem unteren Bereich des Vorratsbehälters oberhalb der Dosieröffnung ist eine ein Rührorgan tragende Rührwelle angeordnet. Diese Rührwelle ist horizontal in den Vorratsbehälter hineingeführt und zum Boden und zur Ebene der Dosieröffnung zumindest annähernd parallel verlaufend ausgerichtet.

Der Erfindung liegt die Aufgabe zugrunde, eine optimierte Rührwirkung des Rührorgans im Bereich der Teilöffnungen bei kleinen Massenströmen zu gewährleisten.

Diese Aufgabe wird erfindungsgemäß durch die Mermale des Anspruchs 1 gelöst.

Unter Teilöffnungen werden die zumindest zwei Teilflächen der Dosieröffnung verstanden, welche zunächst vom Schieber freigegeben werden, bevor diese in die größere gemeinsame Öffnungsfläche der Dosieröffnung bei größeren Ausbringmengen bzw. Massenströmen übergehen.

Eine optimierte Rührwirkung des Rührorgans im Bereich der Teilöffnungen bei kleinen Massenströmen wird dadurch erreicht, dass die Längsachse der Rührwelle in Draufsicht gesehen zumindest annähernd mit der die zumindest beiden Flächenschwerpunkte der Teilöffnungen untereinander verbindenden Geraden fluchtet.

Ebenfalls ergibt sich eine gute und sichere Rührwirkung dadurch, dass die Längsachse der Rührwelle derart angeordnet ist, dass die am dichtesten zu den ersten Öffnungskanten der Teilöffnungen der Dosieröffnung und/oder der Dosieröffnung gelegenen Punkte der von den äußeren Enden der Rührelemente beschriebenen Umlaufbahnen zumindest annähernd den gleichen Abstand zu den ersten Öffnungskanten aufweisen.

Eine vorteilhafte Anordnung der Rührwelle, um eine gute Rührwirkung zu erzielen, ergibt sich dadurch, dass die Längsachse der Rührwelle zumindest annähernd parallel zu den ersten Öffnungskanten der Teilöffnungen der Dosieröffnung und/oder der Dosieröffnung verläuft.

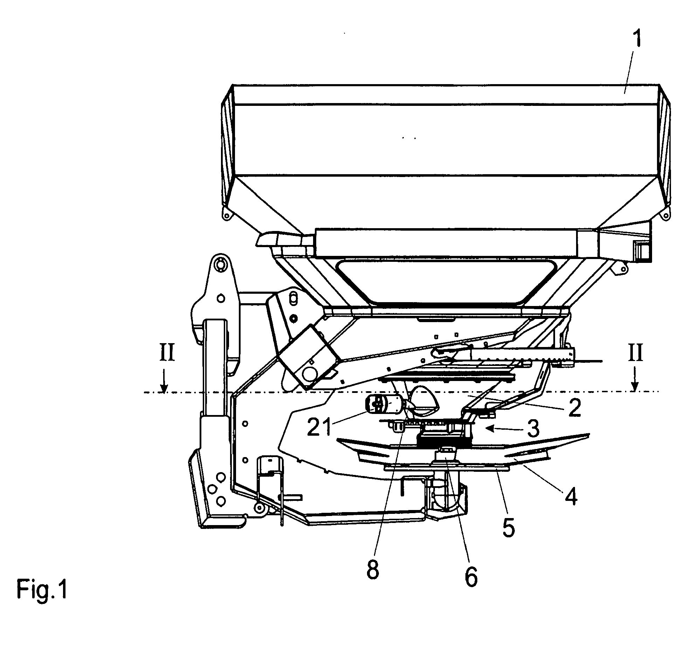

Weitere Einzelheiten der Erfindung sind der Beispielsbeschreibung und den Zeichnungen zu entnehmen. Hierbei zeigen
- Fig. 1: den Schleuderstreuer in Seitenansicht und in Prinzipdarstellung,
- Fig. 2: die aus Dosieröffnung und Dosierschieber bestehende Dosiereinrichtung für die in Fahrtrichtung gesehen linke Schleuderscheibe des Zweischeibenstreuers, wobei die Dosieröffnung für kleine Massenströme durch die Freigabe der Teilöffnungen durch den Dosierschieber geöffnet ist, in der Ansicht II - II,
- Fig. 3: die aus Dosieröffnung und Dosierschieber bestehende Dosiereinrichtung für die in Fahrtrichtung gesehen linke Schleuderscheibe des Zweischeibenstreuers, wobei die Dosieröffnung für kleine Massenströme durch die Freigabe der Teilöffnungen durch den Dosierschieber geöffnet ist, in vergrößertem Maßstab in der Ansicht gemäß Fig. 2, jedoch ohne Darstellung des Rührorgans.
- Fig.4: die Dosiereinrichtung gemäß Fig. 3 in gleicher Darstellungsweise, jedoch mit einer anderen Anordnung der Rührwelle und mit Rührelementen und
- Fig.5: die Anordnung des Rührgans mit Rührelementen gemäß Fig.4 in der Ansicht V-V.

Der Zweischeibenstreuer zur Ausbringung von Streugut, insbesondere Mineraldünger in der Landwirtschaft weist den Vorratsbehälter 1 auf, der zwei sich trichterförmig nach unten verjüngende Auslauftrichter 2 aufweist. Die Auslauftrichter 2 sind jeweils durch eine Dosiereinrichtung 3 abgeschlossen. Unterhalb der Dosiereinrichtung 3 ist jeweils eine mittels eines motorischen Antriebes rotierend angetriebene und mit Wurfflügeln 4 besetzte Schleuderscheibe 5 auf der Antriebswelle 6 angeordnet. In dem unteren Bereich jedes Auslauftrichters 2 oberhalb der Dosiereinrichtung 3 befindet das Rührorgan 7. Das Rührorgan 7 weist die jeweils in den unteren Bereich jedes Auslauftrichters 2 des Vorratsbehälters ragende, drehbar angetriebene Rührwelle 8. Die Rührwelle 8 trägt die Rührelemente 9, welche im unteren Bereich des Vorratsbehälters 2 dicht oberhalb der Dosiereinrichtung 3 wirksam sind.

Die Dosiereinrichtung 3 weist jeweils eine Dosierplatte 10 mit einer Dosieröffnung 11 und einem zugeordneten Dosierschieber 12 zum Verschließen der Dosieröffnung 11 und zum Einstellen der Öffnungsweite der Dosieröffnung 11 auf. Der Dosierschieber 12 ist mittels einer ihm zuordneten, jedoch nicht dargestellten motorischen Stelleinrichtung um die Gelenkachse des Gelenkbolzens 13, mit dem Dosierschieber 12 an der Dosiervorrichtung 3 befestigt ist, in die jeweils gewünschte Position zu verstellen. Die Dosierplatte 10 kann in nicht dargestellter Weise an dem Auslauftrichter 2 in festgesetzter oder in verstellbarer Weise zur Verlagerung der Dosieröffnung 11 gegenüber der Verteilerscheibe 5 und der Antriebswelle 6 der Schleuderscheibe 5 verstellbar angeordnet sein.

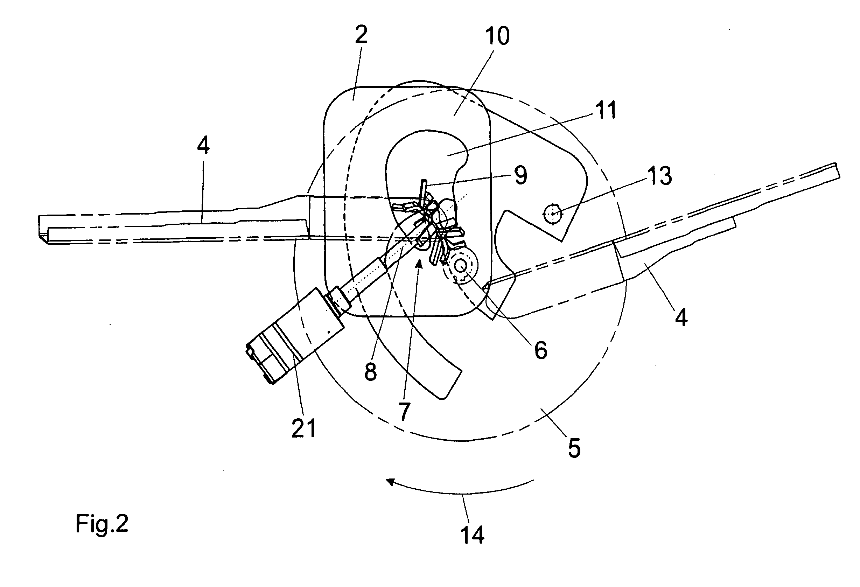

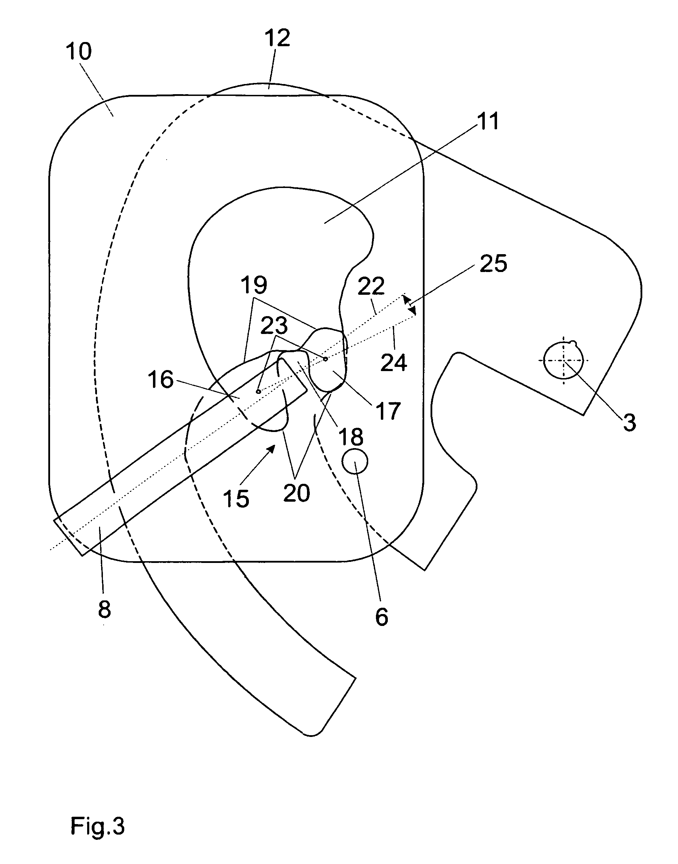

Die Antriebswelle 6 der Schleuderscheibe 5 ist in den Fig. 2 durch die kreisförmige Darstellung dargestellt. In Fig. 2 ist die Schleuderscheibe 5 mit den Wurfschaufeln 4 unterhalb der Dosiereinrichtung 3 mit unterbrochenen Strichen dargestellt. In den Fig. 2 und 3 ist jeweils die Dosiereinrichtung 3, die der in Fahrtrichtung gesehen linken Schleuderscheibe 5 zugeordnet ist, dargestellt. Die Schleuderscheibe 5 wird in Drehrichtung, wie durch den Pfeil 14 gekennzeichnet ist, angetrieben.

Die Dosieröffnung 11 erstreckt sich von der Drehachse 6 der Schleuderscheibe 5 aus gesehen in sich radial nach außen erweiternder Weise. Der Öffnungsbereich 15 der Dosieröffnung 11 befindet sich in dem der Schleuderscheibenachse 6 benachbarten Bereich. Im Öffnungsbereich 15 weist die Dosieröffnung 11 zwei beabstandet zueinander angeordnete und im wesentlichen in Drehrichtung 14 der Schleuderscheibe 5 hintereinander liegende Teilöffnungen 16 und 17 auf, welche durch ein von der Schleuderscheibenachse 6 aus gesehen etwa radial sich erstreckenden plattenförmigen Steg 18 der Dosierplatte 10 voneinander getrennt sind. Im Anfangsbereich ist der frei gegebenen Öffnungsbereich der Dosieröffnung 8 also geteilt ausgebildet. Die beiden Teilöffnungen 16 und 17 bei kleinen Massenströmen werden zwischen Dosierkante des Schiebers 12 und der Öffnungskante 20 der Dosieröffnung gebildet. Unter den Teilöffnungen 16 und 17 werden die beiden Flächen der Dosieröffnung 11 verstanden, die zunächst vom Schieber 12 freigeben werden, bevor sie in eine größere gemeinsame Öffnungsfläche der Dosieröffnung 11 übergehen.

Unterhalb der Dosierplatte 10 ist der vorerwähnte Dosierschieber 12 zur Verschließung der Dosieröffnung 11 und zum Einstellen dessen jeweils gewünschter Öffnungsweite angeordnet.

Das Rührorgan 7, d.h. die Rührwelle 8 mit den Rührelementen 9 sind im Bereich der Teilöffnungen 16 und 17 bei kleinen Massenströmen oberhalb der Dosieröffnung 11 im unteren Bereich des Vorratsbehälters 1 angeordnet. Die Rührwelle 8 ist parallel zur Dosierplatte 10, die als Boden des Auslauftrichters 2 ausgebildet ist, und zur Ebene der Dosieröffnung 11 angeordnet. Die Rührwelle 8 wird von einem motorischen Antriebselement, hier von einem Elektro- oder Hydraulikmotor 21 angetrieben.

Die Längsachse 22 jeder Rührwelle 8 und die Rührelemente 9 in jedem Auslauftrichter 2 befinden sich oberhalb der Teilöffnungen 16, 17 jeder Dosieröffnung 11 bei kleinen Massenströmen.

Die Längsachse 22 der Rührwelle 8 schneidet in Draufsicht gesehen zumindest annähernd die Teilflächenschwerpunkte 23 der beiden Teilöffnungen 16, 17, die die Fig. 3 zeigt. Wie weiterhin die Fig. 3 zeigt, fluchtet die Längsachse 22 der Rührwelle 8 in Draufsicht gesehen zumindest annähernd mit der die beiden Flächenschwerpunkte 23 der Teilöffnungen 16, 17 untereinander verbindenden Geraden 24. Unter zumindest annähernd werden hier Winkelabweichungen 25 bis zu 20°, vorzugsweise bis zu 10° verstanden.

Die Längsachse 22 der Rührwelle 8 fluchtet in Draufsicht gesehen zumindest annähernd mit der die zumindest beiden Flächenschwerpunkte 23 der Teilöffnungen 16, 17 untereinander verbindenden Geraden 24 und befindet sich zumindest annähernd oberhalb dieser Geraden 24.

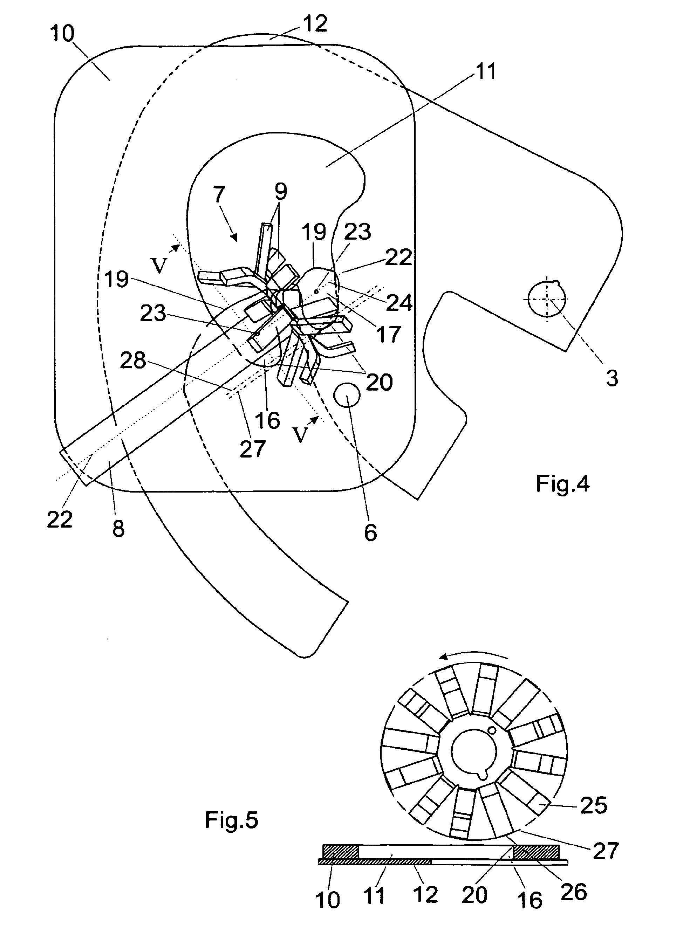

Bei der Ausführungsvariante nach der Fig. 4 und 5 ist die Längsachse 22 der Rührwelle 8 parallel zu der die Flächenschwerpunkte 23 verbindenden Geraden 24 angeordnet. Weiterhin befindet sich die Längsachse 22 der Rührwelle 8 senkrecht oberhalb der Geraden 24.

Die Längsachse 22 der Rührwelle 8 ist weiterhin derart angeordnet, dass sie parallel zu der durch die am dichtesten zu den ersten Öffnungskanten 20 der Teilöffnungen 16, 17 der Dosieröffnung 11 und/oder der Dosieröffnung 11 gelegenen Punkte 26, die am dichtesten zu der durch die Öffnungskanten 20 gezogenen Geraden 27 liegen, verläuft. Durch die Punkte 26 ist die Gerade 28 gezogen. Die von den äußeren Enden 25 der Rührelemente 9 beschriebenen Umlaufbahnen 27 weisen zumindest annähernd den gleichen Abstand zu den ersten Öffnungskanten 20 auf.

Die Längsachse 22 der Rührwelle 8 verläuft zumindest annähernd parallel zu den ersten Öffnungskanten 20 der Teilöffnungen 16, 17 der Dosieröffnung 11 und/oder der Dosieröffnung 11.

## Patentansprüche

1. Zweischeibenstreuer für Streugut mit einem Vorratsbehälter (1), der sich je zu einem Boden verjüngende Trichter (2) aufweist, je einer jedem Boden zugeordneten Dosiereinrichtung (3) mit einer Dosieröffnung (11) mit einem Dosierschieber (12) zur Einstellung des gewünschten Massenstromes und je einer darunter umlaufenden Schleuderscheibe (5) mit Wurfflügeln (4), die im einander benachbarten Bereich entgegen der Fahrtrichtung des Streuers von innen nach außen umlaufen und sich nicht vollständig überlappende Streufächer erzeugen, wobei durch den Schieber (12) der freigebbare Querschnitt der Dosieröffnung (11) in veränderbarer Weise einstellbar ist, wobei bei kleinen Massenströmen zwischen Dosierkante des Dosierschiebers (12) und der Öffnungskante der Dosieröffnung (11) zumindest zwei Teilöffnungen (16, 17) gebildet werden, die in Drehrichtung (14) der Verteilerscheibe (12) beabstandet zueinander und im Wesentlichen hintereinander liegen, wobei ein zumindest im Bereich der Teilöffnungen (16, 17) bei kleinen Massenströmen wirksames Rührorgan (7) im unteren Bereich des Vorratsbehälters (1) angeordnet ist, **dadurch gekennzeichnet, dass** das Rührorgan (7) eine zumindest annähernd parallel zum Boden (10) und/oder zur Ebene der Dosieröffnung (11) angeordnete und drehbar angetriebene Rührwelle (8) mit zugeordneten Rührelementen (9) in jedem Trichter (2) aufweist, und dass die Längsachse (22) jeder Rührwelle (8) und die Rührelemente (9) sich oberhalb der Teilöffnungen (16, 17) jeder Dosieröffnung (11) bei kleinen Massenströmen befinden;
wobei die Teilöffnungen (16, 17) zumindest zwei Teilflächen der Dosieröffnung (11) entsprechen, welche zunächst vom Schieber (12) freigegeben werden, bevor diese in die größere gemeinsame Öffnungsfläche der Dosieröffnung (11) bei größeren Ausbringmengen bzw. Massenströmen übergehen; und
wobei die Längsachse (22) der Rührwelle (8) in Draufsicht gesehen zumindest annähernd mit der die zumindest beiden Flächenschwerpunkte (23) der Teilöffnungen (16, 17) untereinander verbindenden Geraden (24) fluchtet.

2. Zweischeibenstreuer nach Anspruch 1, **dadurch gekennzeichnet, dass** die Längsachse (22) der Rührwelle (8) derart angeordnet ist, dass die am dichtesten zu den ersten Öffnungskanten (20) der Teilöffnungen (16, 17) der Dosieröffnung (11) und/oder der Dosieröffnung (11) gelegenen Punkte (26) der von den äußeren Enden (25) der Rührelemente (9) beschriebenen Umlaufbahnen (27) zumindest annähernd den gleichen Abstand zu den ersten Öffnungskanten (20) aufweisen.

3. Zweischeibenstreuer nach Anspruch 1, **dadurch gekennzeichnet, dass** die Längsachse (22) der Rührwelle (8) in Draufsicht gesehen zumindest annähernd parallel zu den ersten Öffnungskanten (20) der Teilöffnungen (16, 17) der Dosieröffnung (11) und/oder der Dosieröffnung (11) verläuft.

## Claims

1. Two-disc spreader for granular material, having a hopper (1) which has funnels (2) that narrow in each case to a base, having in each case one metering device (3) assigned to each base and with a metering orifice (11) with a metering slide (12) for setting the desired mass flow, and having in each case one centrifuging disc (5) revolving under each metering device and with thrower blades (4) which, in the region in which they are adjacent to one another, revolve from the inside outwards counter to the direction of travel of the spreader and produce spreading fans that do not completely overlap, wherein the openable cross section of the metering orifice (11) is variably settable by the slide (12), wherein, in the case of small mass flows, there are formed between a metering edge of the metering slide (12) and the orifice edge of the metering orifice (11) at least two partial orifices (16, 17) which are situated spaced apart from one another in the direction of rotation (14) of the distributing disc (12) and substantially one behind the other, wherein a stirring element (7) which acts at least in the region of the partial orifices (16, 17) in the case of small mass flows is arranged in the lower region of the hopper (1), **characterized in that** the stirring element (7) has a stirring shaft (8) which is arranged at least approximately parallel to the base (10) and/or to the plane of the metering orifice (11) and which is rotatably driven and which has associated stirring elements (9) in each funnel (2), and **in that** the longitudinal axis (22) of each stirring shaft (8) and the stirring elements (9) are situated above the partial orifices (16, 17) of each metering orifice (11) in the case of small mass flows;
wherein the partial orifices (16, 17) correspond to at least two partial areas of the metering orifice (11) which are opened up by the slide (12) first before these transition into the larger, common orifice area of the metering orifice (11) in the case of greater discharge rates or mass flows; and
wherein the longitudinal axis (22) of the stirring shaft (8) is, as seen in plan view, at least approximately in alignment with the straight line (24) which connects the at least two centres of area (23) of the partial orifices (16, 17) to one another.

2. Two-disc spreader according to Claim 1, **characterized in that** the longitudinal axis (22) of the stirring shaft (8) is arranged such that, on the orbits (27) described by the outer ends (25) of the stirring elements (9), those points (26) on said orbits which are situated closest to the first orifice edges (20) of the partial orifices (16, 17) of the metering orifice (11) and/or of the metering orifice (11) are at least approximately the same distance from the first orifice edges (20).

3. Two-disc spreader according to Claim 1, **characterized in that** the longitudinal axis (22) of the stirring shaft (8) runs, as seen in plan view, at least approximately parallel to the first orifice edges (20) of the partial orifices (16, 17) of the metering orifice (11) and/or of the metering orifice (11).

## Revendications

1. Épandeur à double disque pour un produit d'épandage, comprenant un réservoir de stockage (1) qui comprend des entonnoirs (2) se rétrécissant chacun en direction d'un fond, un dispositif de dosage respectif (3), associé à chaque fond, comprenant un orifice de dosage (11) avec un tiroir doseur (12) pour le réglage du débit massique souhaité, et un disque distributeur respectif (5) tournant en dessous de ce dispositif de dosage et pourvu d'ailettes d'éjection (4) qui tournent de l'intérieur vers l'extérieur, en sens inverse à la direction d'avancement de l'épandeur dans des régions adjacentes l'une à l'autre, et produisent des zones d'épandage ne se chevauchant pas complètement, la section transversale de l'orifice de dosage (11) qui peut être dégagée pouvant être réglée de manière modifiable au moyen du tiroir (12), au moins deux orifices partiels (16, 17) étant formés entre l'arête de dosage du tiroir doseur (12) et l'arête d'orifice de l'orifice de dosage (11) en cas de débits massiques faibles, lesquels orifices partiels sont espacés les uns des autres dans le sens de rotation (14) du disque distributeur (12) et sont situés essentiellement les uns derrière les autres, un organe d'agitation (7) agissant au moins dans la région des orifices partiels (16, 17) en cas de débits massiques faibles étant disposé dans la région inférieure du réservoir de stockage (1), **caractérisé en ce que** l'organe d'agitation (7) comprend un arbre d'agitation (8), disposé au moins approximativement parallèlement au fond (10) et/ou au plan de l'orifice de dosage (11) et entraîné en rotation, comprenant des éléments d'agitation (9) associés dans chaque entonnoir (2), et **en ce que** l'axe longitudinal (22) de chaque arbre d'agitation (8) et les éléments d'agitation (9) se trouvent au-dessus des orifices partiels (16, 17) de chaque orifice de dosage (11) en cas de débits massiques faibles ; les orifices partiels (16, 17) correspondant à au moins deux surfaces partielles de l'orifice de dosage (11), lesquelles sont tout d'abord dégagées par le tiroir (12) avant de se prolonger dans la plus grande surface d'orifice commune de l'orifice de dosage (11) en cas de quantités d'épandage ou de débits massiques plus élevés ; et
l'axe longitudinal (22) de l'arbre d'agitation (8), considéré en vue de dessus, étant au moins approximativement en alignement avec la droite (24) reliant les uns aux autres les au moins deux barycentres de surface (23) des orifices partiels (16, 17).

2. Épandeur à double disque selon la revendication 1, **caractérisé en ce que** l'axe longitudinal (22) de l'arbre d'agitation (8) est disposé de telle sorte que les points (26), situés au plus près des premières arêtes d'orifice (20) des orifices partiels (16, 17) de l'orifice de dosage (11) et/ou de l'orifice de dosage (11), des trajectoires (27) décrites par les extrémités extérieures (25) des éléments d'agitation (9) sont disposés à au moins approximativement la même distance des premières arêtes d'orifice (20).

3. Épandeur à double disque selon la revendication 1, **caractérisé en ce que** l'axe longitudinal (22) de l'arbre d'agitation (8), considéré en vue de dessus, s'étend au moins approximativement parallèlement aux premières arêtes d'orifice (20) des orifices partiels (16, 17) de l'orifice de dosage (11) et/ou de l'orifice de dosage (11).
